# EUROPÄISCHE PATENTSCHRIFT

(11) **EP 3 077 691 B1**
(45) Veröffentlichungstag und Bekanntmachung des Hinweises auf die Patenterteilung: **27.09.2017**
(21) Anmeldenummer: 14781232.5
(22) Anmeldetag: 08.10.2014
(51) Int. Cl.: F16D 29/00, F16D 28/00, F16D 23/12

(54) **AKTUATOR ZUM BETÄTIGEN EINES HYDRAULISCHEN KUPPLUNGSSTELLERS SOWIE ELEKTRISCH BETÄTIGBARE KUPPLUNG**
ACTUATOR FOR ACTIVATING A HYDRAULIC CLUTCH ACTUATOR AND CLUTCH WHICH CAN BE ACTIVATED ELECTRICALLY
ORGANE DE COMMANDE POUR ACTIONNER UN ACTIONNEUR HYDRAULIQUE D'EMBRAYAGE ET EMBRAYAGE À COMMANDE ÉLECTRIQUE

(30) Priorität: 05.12.2013 DE 102013224958
(43) Veröffentlichungstag der Anmeldung: 12.10.2016
(73) Patentinhaber: Robert Bosch GmbH, 70442 Stuttgart (DE)
(72) Erfinder: GERUNDT, Oliver, 71292 Friolzheim (DE); FEIGL, Markus, 71706 Markgroeningen (DE); DREWE, Ingo, 77815 Buehl (DE); KOERNER, Michael, 53229 Bonn (DE)
(86) Internationale Anmeldenummer: PCT/EP2014/071515
(87) Internationale Veröffentlichungsnummer: WO 2015/082101

(56) Entgegenhaltungen:
- WO-A1-2005/008094
- DE-A1-102011 107 245
- US-A1- 2007 180 940

## Beschreibung

### Gebiet der Erfindung

Die vorliegende Erfindung betrifft einen Aktuator zum Betätigen eines hydraulischen Kupplungsstellers sowie ein mit einem solchen Aktuator ausgestattetes, elektrisch betätigbares Kupplungsystem.

### Stand der Technik

In Kraftfahrzeugen werden herkömmlich Kupplungen dazu eingesetzt, um einen Leistungsfluss zwischen einem Motor und einem mit den Rädern des Kraftfahrzeugs gekoppelten Antriebsstrang zeitweilig trennen zu können.

Herkömmlich wird hierzu eine Kupplung über ein von einem Fahrer niederzutretendes Fußpedal betätigt. Die auf das Fußpedal ausgeübte Kraft wird bei modernen Fahrzeugen meist über eine Hydraulikleitung hin zu der Kupplung übertragen. Bei dem Fußpedal befindet sich dabei ein Hydraulikzylinder, der als Geberzylinder bezeichnet wird. Bei einer Kupplungsausrückeinrichtung befindet sich ein mit diesem Geberzylinder über eine Hydraulikleitung in Verbindung stehender Hydraulikzylinder, der als Nehmerzylinder oder Kupplungssteller bezeichnet wird. Die Kupplungen sind im Allgemeinen im unbetätigten Zustand geschlossen ("normaly-closed"). Möchte der Fahrer den Leistungsfluss zwischen Motor und Antriebsstrang unterbrechen, betätigt er das Fußpedal, wodurch ein Volumen an Hydraulikflüssigkeit in Richtung Nehmerzylinder gedrückt wird. Ein Kolben im Nehmerzylinder wird hierdurch verschoben, wodurch die Kupplung entgegen einer Kupplungsfederkraft ausgerückt wird. Löst der Fahrer das Fußpedal wieder, drückt die Kupplungsfederkraft das Hydrauliköl aus dem Nehmerzylinder zurück in Richtung Geberzylinder.

Durch Leckage und Temperaturschwankungen muss Hydrauliköl in einem solchen System von Zeit zu Zeit nachgeführt werden. Dies kann beispielsweise dadurch geschehen, dass der Kolben in dem Geberzylinder soweit zurückgeschoben wird, dass eine sogenannte "Schnüffelbohrung" freigegeben wird, durch die Öl aus einem Reservoir in den Zylinder und damit in das Hydrauliksystem nachfließen kann. Ein solches Zurückschieben des Kolbens geschieht bisher meist durch eine zusätzliche Feder oder ein Spindel-Mutter-System, welches auch gegen einen geringen Unterdruck arbeiten kann.

Als Weiterentwicklung für durch den Fahrer zu betätigende Kupplungssysteme werden derzeit für moderne Kraftfahrzeuge elektrisch betätigbare Kupplungen entwickelt. Bei diesen ist das Kupplungspedal nicht mehr direkt mechanisch mit der Hydraulik verbunden. Stattdessen erfasst ein Sensor eine aktuelle Pedalstellung und sendet daraufhin ein entsprechendes Signal an ein Steuergerät. Basierend auf diesem Signal betätigt das Steuergerät einen elektrohydraulischen Aktuator oder Aktor, der meist durch eine Drehbewegung eines Elektromotors einen Kolben in dem Geberzylinder des Hydrauliksystems bewegt. Solche Aktoren können beispielsweise derart implementiert sein, dass eine elektromechanisch angetriebene Spindelmutter eine Spindel bewegt, die wiederum auf einen Hydraulikkolben drückt.

In im Normalzustand geschlossenen Kupplungen sorgen im Allgemeinen Kupplungsfedern für die zum Schließen der Kupplung notwendige Kraft auf die Kupplungsscheiben. Die Charakteristik bzw. Kennlinie solcher Kupplungsfedern bestimmt bei herkömmlichen, vom Fahrer direkt mechanisch zu betätigenden Kupplungen, das von der Kupplung über die Hydraulik an das Kupplungspedal übertragene und somit vom Fahrer haptisch zu erfassende Kraftverhalten der Kupplung. Typischerweise besitzen Kupplungsfedern keine lineare Kraft-Kennlinie, sondern eine S-förmige Kennlinie. Bei der Betätigung einer Kupplung besteht im Allgemeinen der Wunsch bzw. die Anforderung, im ersten Teil der Kennlinie, d.h. bei anfänglichem Niederdrücken des Kupplungspedals, schnell mit geringer Kraft verfahren zu können und im zweiten Teil mit wesentlich größerer Kraft, d.h. die Feder ist stark gespannt, und mit hoher Genauigkeit.

Lineare Systeme, wie der oben beschriebene Spindel-Mutter-Aktor, werden solchen Anforderungen nicht gerecht.
Aus der DE 10 2011 107245 A1 ist ein Aktuator gemäß dem Oberbegriff des Anspruchs 1 bekannt. Die WO 2005/008094 A1 offenbart einen zur DE 10 2011 107245 A1 ähnlichen Aktuator.

### Offenbarung der Erfindung

Ausführungsformen der vorliegenden Erfindung ermöglichen einen Aktuator zum Betätigen eines hydraulischen Kupplungsstellers, der einerseits eine geeignete Kraft-Kennlinie zum Betätigen einer Kupplung bewirken kann und der andererseits einfach aufgebaut und zuverlässig arbeiten kann. Insbesondere kann bei dem Aktuator der hydraulische Kupplungssteller in geeigneten Betriebszuständen derart verfahren werden, dass ein Kolben eine Schnüffelbohrung freigibt und Hydrauliköl nachfließen kann.
Gemäß einem ersten Aspekt der vorliegenden Erfindung wird ein Aktuator zum Betätigen eines hydraulischen Kupplungsstellers vorgeschlagen, der einen Elektromotor, eine von dem Elektromotor um eine Achse drehend angetriebene Stellscheibe, eine mit der Stellscheibe gekoppelte erste Kulissenstruktur und eine Betätigungsstange aufweist. Die erste Kulissenstruktur bildet hierbei eine Anpressfläche, deren Radius bezogen auf die Achse, um die sich die Stellscheibe dreht, kontinuierlich von einem Punkt minimalen Radius in einer Betätigungs-Umlaufrichtung um die Achse hin zu einem Punkt maximalen Radius zunimmt. Die Betätigungsstange steht an ihrem einen Ende mit dem Kupplungssteller, d.h. beispielsweise mit einem Kolben eines Geberzylinders, in Eingriff. Die Betätigungsstange ist dabei derart geführt und an der ersten Kulissenstruktur abgestützt, dass bei einem Drehen der Stellscheibe in der Betätigungs-Umlaufrichtung von der ersten Kulissenstruktur ein Druck auf die Betätigungsstange ausgeübt wird. Der Aktuator ist dadurch gekennzeichnet, dass an die Stellscheibe gekoppelt eine zweite Kulissenstruktur ausgebildet ist. Diese zweite Kulissenstruktur ist derart ausgeführt, dass bei einem Drehen der Stellscheibe entgegen der Betätigungs-Umlaufrichtung zumindest bereichsweise von der zweiten Kulissenstruktur, ein Zug auf die Betätigungsstange ausgeübt wird.
Ideen zur Ausführungsform der vorliegenden Erfindung können unter anderem als auf den nachfolgend beschriebenen Gedanken und Erkenntnissen beruhend angesehen werden:

Wie einleitend angemerkt, können bei elektrisch betätigbaren Kupplungssystemen Aktuatoren, die Betätigungskräfte linear erzeugen, wie z.B. Spindel-Mutter-Aktuatoren, den Anforderungen an Kraft-Kennlinien zum Betätigen der Kupplung in der Regel nicht gerecht werden. Ein Lösungsansatz ist, einen Aktuator mit einer Art Kulissenscheibe zu versehen, bei der eine Anpressfläche eine Kurvenbahn beschreibt, die nicht kreisförmig um ein Rotationszentrum, sondern schneckenförmig ist. Bei einer solchen schneckenförmig ausgebildeten Anpressfläche einer Kulissenstruktur nimmt der Radius, d.h. der Abstand zwischen der Anpressfläche und dem Rotationsmittelpunkt, als Funktion des Drehwinkels zu. Die Krümmung bzw. Kurve der Kulissenstruktur kann dabei der Kennlinie der Kupplung und den hierbei auftretenden Anforderungen angepasst werden.

Die schneckenförmige Kulissenstruktur kann an der vom Elektromotor angetriebenen Stellscheibe angebracht oder zumindest mit dieser mechanisch gekoppelt sein, so dass sie sich, wenn die Stellscheibe durch den Elektromotor um ihre Achse gedreht wird, ebenfalls dreht. Ein Ende der Betätigungsstange stützt sich dabei an der durch die Kulissenstruktur gebildeten Anpressfläche ab. Da der Radius der Kulissenstruktur variiert, kann durch Drehen der Stellscheibe und somit Drehen der Kulissenstruktur die Betätigungsstange verlagert werden.

Die Betätigungsstange, die an ihrem anderen Ende mit dem hydraulischen Kupplungssteller gekoppelt ist, der wiederum über die Hydraulik mit der federvorgespannten Kupplung in Verbindung steht, wird im Normalfall mit einer entsprechenden Vorspannung gegen die Anpressfläche der Kulissenstruktur gepresst. Solange der hydraulische Kupplungssteller eine ausreichende Rückstellkraft erzeugt, ist daher sichergestellt, dass die Betätigungsstange in mechanischem Kontakt mit der Anpressfläche der Kulissenstruktur bleibt.

Allerdings ist es, wie einleitend beschrieben, von Zeit zu Zeit nötig, einen Ölstand in dem Hydrauliksystem nachzufüllen. Hierzu sollte ein Kolben des Kupplungsstellers über eine Schnüffelbohrung hinaus zurückgezogen werden können, damit Öl bzw. Hydraulikflüssigkeit durch die Schnüffelbohrung hindurch in den Zylinder des Kupplungsstellers fließen kann.

In herkömmlichen Systemen kann hierfür eine zusätzliche Feder vorgesehen sein, mithilfe der eine Kraft bewirkt werden kann, um den Kolben in dem Kupplungssteller über die Schnüffelbohrung hinaus zu ziehen. Als Nachteil einer solchen Lösung kann jedoch gesehen werden, dass im gesamten Betriebsbereich des Aktuators gegen eine solche zusätzliche Feder gearbeitet werden muss, so dass insgesamt der Elektromotor des Aktuators eine höhere Leistung abgeben muss.

Gemäß Ausführungsformen der vorliegenden Erfindung kann auf eine solche zusätzliche Feder zum Zurückziehen des Kolbens des Kupplungsstellers über die Schnüffelbohrung hinaus verzichtet werden. Stattdessen wird in dem Aktuator eine mit der Stellscheibe gekoppelte zweite Kulissenstruktur vorgesehen. Während die erste Kulissenstruktur dazu ausgestaltet ist, bei Drehen der Stellscheibe in einer Betätigungs-Umlaufrichtung einen Druck auf die an der Anpressfläche der Kulissenstruktur anliegende Betätigungsstange auszuüben, ist die zweite Kulissenstruktur dazu ausgebildet, bei entgegengesetzter Betätigungsrichtung einen Zug auf diese Betätigungsstange auszuüben.

Mit anderen Worten verlässt sich der vorgeschlagene Aktuator nicht mehr allein darauf, dass die Betätigungsstange von dem hydraulischen Kupplungssteller, bzw. der mit diesem Kupplungssteller zusammenwirkenden vorgeschlagenen Kupplungsfeder allein an die Anpressfläche der ersten Kulissenstruktur angepresst wird und auch über den gesamten Verfahrweg der Kulissenstruktur an die Anpressfläche angepresst bleibt. Statt dessen wird zusätzlich eine zweite Kulissenstruktur vorgesehen, welche für den Fall, dass die durch den Kupplungssteller bewirkte Rückstellkraft nicht ausreichen sollte, die Betätigungsstange mit ihrem einen Ende an der Anpressfläche der ersten Kulissenstruktur zu halten, die Betätigungsstange aktiv zurückzieht.

Die zweite Kulissenstruktur wirkt somit wie eine Art Fanghaken, mit der die Betätigungsstange für den Fall, dass sie sich von der Anpressfläche der ersten Kulissenstruktur löst bzw. zu lösen droht, "eingefangen" wird, und aktiv weg von dem hydraulischen Kupplungssteller gezogen wird. Die von der zweiten Kulissenstruktur dabei bewirkte Zugkraft kann beispielsweise dazu dienen, den Kolben des Kupplungsstellers zeitweilig über eine Schnüffelbohrung hinaus nach hinten zu ziehen, ohne dass hierfür eine weitere Feder vorzusehen wäre.

Gemäß einer Ausführungsform ist die zweite Kulissenstruktur derart ausgeführt, dass von der zweiten Kulissenstruktur lediglich bei einem Drehen der Stellscheibe entgegen der Betätigungs-Umlaufrichtung in einem Winkelbereich nahe dem Punkt minimalen Radius ein Zug auf die Betätigungsstange ausgeübt wird. Mit anderen Worten braucht die zweite Kulissenstruktur nicht während des gesamten möglichen Drehweges der Stellscheibe einen Zug auf die Betätigungsstange ausüben, sondern es genügt, wenn die zweite Kulissenstruktur lediglich nahe dem Punkt minimalen Radius der ersten Kulissenstruktur, d.h. wenn die durch den hydraulischen Kupplungssteller bewirkte Rückstellkraft minimal wird, die Betätigungsstange "einfängt".

Gemäß einer Ausführungsform ist die zweite Kulissenstruktur parallel zu der ersten Kulissenstruktur verlaufend, d.h. mit konstantem Abstand voneinander, angeordnet. Dies bedeutet nicht zwingend, dass die zweite Kulissenstruktur die gleiche Länge aufweist wie die erste Kulissenstruktur, sondern gibt nur vor, dass die zweite Kulissenstruktur, die in der Regel wesentlich kürzer ist als die erste Kulissenstruktur, parallel zu zumindest einem Teilbereich der ersten Kulissenstruktur verläuft. Beispielsweise kann die zweite Kulissenstruktur parallel zu der ersten Kulissenstruktur in einem Teilbereich nahe einem ersten Ende der ersten Kulissenstruktur, d.h. dort wo die erste Kulissenstruktur einen minimalen Radius in Bezug auf die Drehachse aufweist, ausgebildet sein und dort parallel zu der ersten Kulissenstruktur verlaufen. Die zweite Kulissenstruktur kann somit, ähnlich wie die erste Kulissenstruktur, eine schneckenförmige Gestalt mit in Betätigungs-Umlaufrichtung zunehmendem Radius aufweisen.

Gemäß einer Ausführungsform ist die Betätigungsstange über ein an dieser angebrachtes Lager an der ersten Kulissenstruktur abgestützt, wobei das Lager um eine Führungsachse drehbar ist und wobei die zweite Kulissenstruktur derart ausgeführt ist, dass bei einem Drehen der Stellscheibe entgegen der Betätigungs-Umlaufrichtung von der zweiten Kulissenstruktur eine Zugkraft auf die Führungsachse ausgeübt wird. Mit anderen Worten braucht die zweite Kulissenstruktur nicht direkt mit der Betätigungsstange zusammenwirken, sondern kann mit einem an dieser Betätigungsstange angebrachten Lager zusammenwirken, um die erwünschte Zugkraft auf die Betätigungsstange ausüben zu können. Das Lager, mit der sich die Betätigungsstange an der ersten Kulissenstruktur abstützt, braucht nicht in direktem mechanischen Kontakt mit der ersten Kulissenstruktur stehen, sondern es kann an dem Lager beispielsweise eine Rolle gelagert vorgesehen sein, über die sich das Lager an der ersten Kulissenstruktur abstützen kann und die entlang der ersten Kulissenstruktur rollen kann.

Gemäß einer Ausführungsform kann an einer Welle des Elektromotors eine Spindel angeordnet sein und die Stellscheibe als Schneckenrad ausgebildet sein, dessen Zahnung mit der Spindel in Eingriff steht. In dieser konkreten Ausführungsform kann die als Schneckenrad ausgebildete Stellscheibe durch den Elektromotor mit Hilfe der an dessen Welle vorgesehenen Spindel angetrieben werden, ähnlich einem Schneckengetriebe. Eine Winkelgeschwindigkeit der Stellscheibe hängt dabei linear von einer Drehzahl des Elektromotors ab. Eine Kraft, die von der mit der Stellscheibe gekoppelten ersten Kulissenstruktur auf die Betätigungsstange ausgeübt wird, ist jedoch aufgrund der schneckenartigen Form der Kulissenstruktur nicht linear abhängig von der Drehzahl des Elektromotors.

Gemäß einer Ausführungsform der Erfindung sind die Stellscheibe und die erste und zweite Kulissenstruktur einstückig ausgebildet. Mit anderen Worten können die beiden Kulissenstrukturen direkt an der Stellscheibe angeformt sein. Beispielsweise kann das gemeinsame Bauteil als Spritzgussteil gefertigt werden.

Gemäß einer Ausführungsform sind die Welle des Elektromotors und die Stellstange in einem schrägen Winkel zueinander angeordnet. Beispielsweise kann die Stellstange derart angeordnet werden, dass sie von einer Position, an der sie mit ihrem einen Ende an der ersten Kulissenstruktur anliegt, schräg zu der Welle des Elektromotors und somit mit ihrem gegenüberliegenden Ende schräg zurück hin zum Elektromotor angeordnet ist. Der an dem zweiten Ende der Stellstange angeordnete Kupplungssteller kann somit nahe neben dem Elektromotor angeordnet werden, so dass eine gesamte Baugröße des Aktuators einschließlich des Kupplungsstellers minimiert werden kann.

Ein elektrisch betätigbares Kupplungsystem, das einen Aktuator gemäß einer Ausführungsform der Erfindung beinhaltet, kann einerseits ein gewünschtes nicht-lineares Kraftverhalten beim Betätigen der Kupplung bewirken, andererseits den Kolben des hydraulischen Kupplungsstellers von Zeit zu Zeit geeignet nach hinten über eine Schnüffelbohrung hinaus zurückziehen, ohne dass hierfür weitere Federelemente nötig wären.

Es wird darauf hingewiesen, dass mögliche Merkmale und Vorteile von Ausführungsformen der Erfindung hierin mit Bezug auf unterschiedliche Ausführungsformen der Erfindung beschrieben sind. Ein Fachmann erkennt, dass die Merkmale in geeigneter Weise ausgetauscht oder kombiniert werden können, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
- Fig. 1: zeigt schematisch ein elektrisch betätigbares Kupplungssystem.
- Fig. 2: zeigt einen Aktuator, bei dem eine Rückstellkraft auf eine Betätigungsstange von einer zusätzlichen Feder unterstützt wird.
- Fig. 3 und 4: zeigen verschiedene perspektivische und teilweise weggeschnittene Ansichten eines Aktuators gemäß einer Ausführungsform der vorliegenden Erfindung.
- Fig. 5 und 6: zeigen verschiedene perspektivische und teilweise weggeschnittene Ansichten eines Aktuators gemäß einer weiteren Ausführungsform der vorliegenden Erfindung.

Die Figuren sind lediglich schematisch und nicht maßstabsgetreu. Gleiche Bezugszeichen bezeichnen in den verschiedenen Zeichnungen gleiche bzw. gleichwirkende Merkmale.

### Ausführungsformen der Erfindung

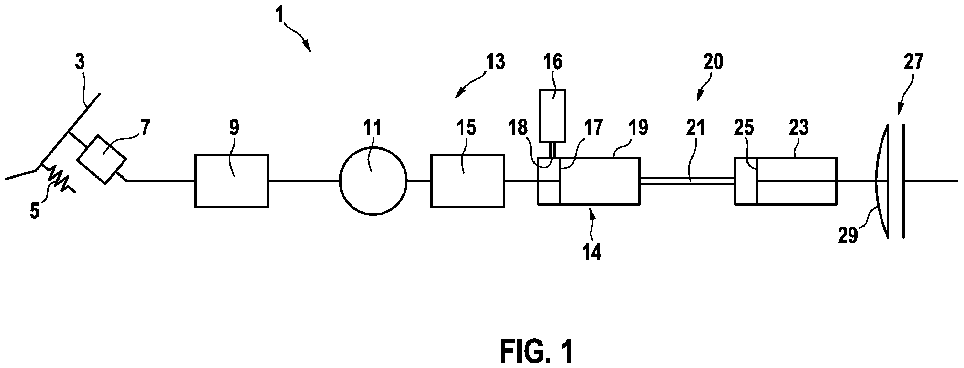

Fig. 1 zeigt ein elektrisch betätigbares Kupplungssystem 1 für ein Kraftfahrzeug. Ein Fußpedal 3 kann entgegen einer Feder 5 von einem Fahrer niedergedrückt werden. Eine aktuelle Position des Fußpedals 3 wird dabei mit Hilfe eines Sensors 7 ermittelt und an ein Steuergerät 9 weitergegeben. Basierend auf den Signalen des Sensors 7 steuert das Steuergerät 9 einen Elektromotor 11 eines Aktuators 13 dazu an, über eine geeignete Kraftübertragungseinrichtung 15, beispielsweise in Form eines Getriebes, einen Kolben 17 innerhalb eines einen Teil eines Kupplungsstellers 14 bildenden Geberzylinders 19 zu verfahren. Hierdurch kann Hydrauliköl durch eine Leitung 21 in einen Nehmerzylinder 23 gepresst werden. Ein Kolben 25 in dem Nehmerzylinder 23 steht in mechanischer Verbindung mit der Kupplung 27 und kann diese, betätigt durch den Nehmerzylinder 23, ausrücken. Eine an der Kupplung 27 vorgesehene Rückstellfeder 29 sorgt dabei für einen entsprechenden Gegendruck auf den Nehmerzylinder 23, so dass bei nachlassender Betätigung des Fußpedals 3 und entsprechender Ansteuerung des Aktuators 13 die Kupplung 27 wieder eingekuppelt wird.

In einem hinteren Bereich des den Kupplungssteller 14 bildenden Geberzylinders 19 ist eine Schnüffelbohrung 18 vorgesehen. Wenn der Kolben 17 weit genug nach hinten über diese Schnüffelbohrung 18 hinaus verfahren wird, kann Hydrauliköl aus einem Reservoir 16 in das Innere des Geberzylinders 19 nachströmen. Hierzu muss im Allgemeinen jedoch der Kolben 17 aktiv über die Schnüffelbohrung 18 hinaus nach hinten gezogen werden.

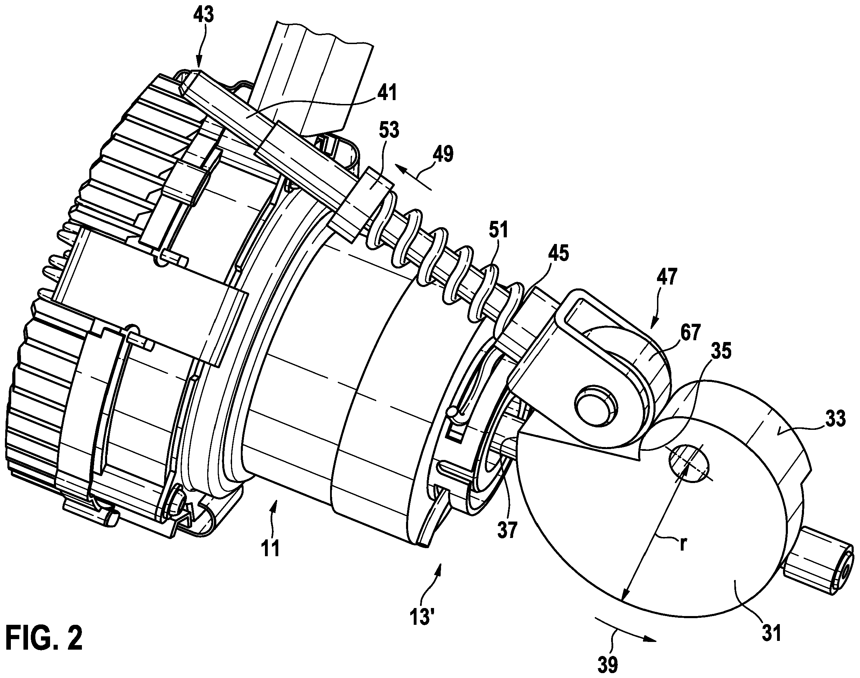

Fig. 2 zeigt einen Aktuator 13', bei dem ein Elektromotor 11 eine Kulissenstruktur 31 drehend antreibt. Die Kulissenstruktur 31 bildet im dargestellten Beispiel an Ihrer Mantelfläche eine Anpressfläche 33, deren Radius r kontinuierlich von einem Punkt 35 minimalen Radius hin zu einem Punkt maximalen Radius 37 zunimmt, wenn eine mit der Kulissenstruktur gekoppelte Stellscheibe (in Fig. 2 aufgrund der Perspektive nicht zu erkennen) die Kulissenstruktur 31 in einer Betätigungs-Umlaufrichtung 39 dreht. Eine Betätigungsstange 41 ist an ihrem einen Ende 43 mit einem hydraulischen Kupplungssteller (in Fig. 2 nicht dargestellt) gekoppelt. Mit ihrem anderen Ende 45 ist die Betätigungsstange 41 über ein daran angebrachtes Lager 47 an der Anpressfläche 33 der Kulissenstruktur 31 abgestützt. Wenn die Kulissenstruktur 31 in der Betätigungs-Umlaufrichtung 39 gedreht wird, presst die Anpressfläche 31 aufgrund des zunehmenden Radius r die Betätigungsstange 41 kontinuierlich in Richtung 49 hin zu dem hydraulischen Kupplungssteller.

Bei der in Fig. 2 dargestellten Ausgestaltung ist die Betätigungsstange 41 durch eine zusätzliche Feder 51, die sich an einem Lager 53 abstützt, entgegen der Richtung 49, d.h. weg von dem Kupplungssteller, vorgespannt. Aufgrund der durch diese Feder 51 bewirkte rückstellende Vorspannung kann ein Kolben 17 des Kupplungsstellers über eine Schnüffelbohrung 18 hinaus nach hinten verfahren werden, so dass Hydrauliköl in das Hydrauliksystem 20 nachfließen kann. Allerdings muss beim Betrieb dieses Aktuators 13' permanent gegen die durch die Feder 51 bewirkte Vorspannung gearbeitet werden.

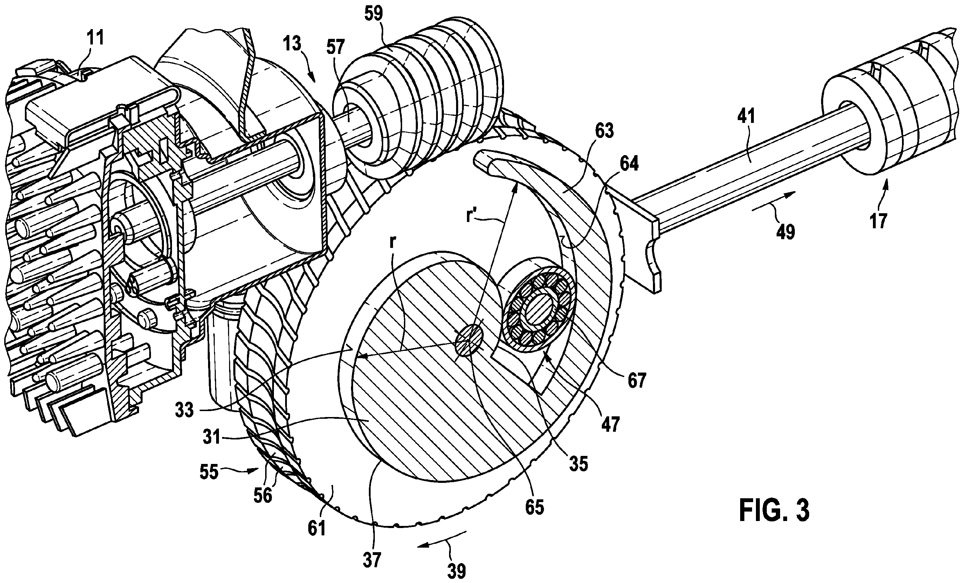

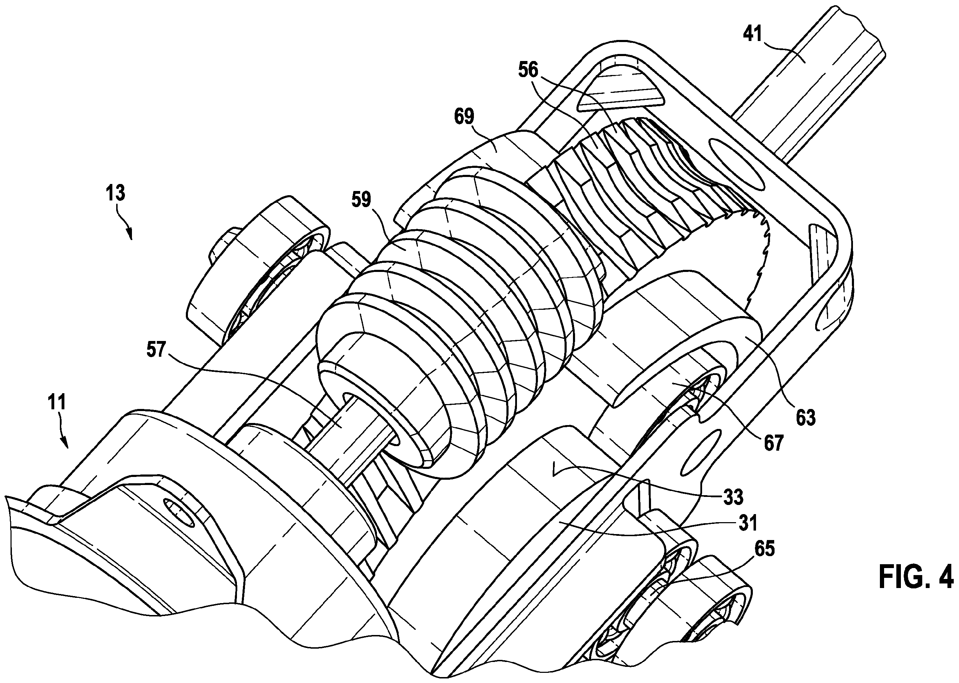

In den Fig. 3 und 4 sind unterschiedliche perspektivische Ansichten einer ersten Ausführungsform eines erfindungsgemäßen Aktuators 13 dargestellt.

Ein Elektromotor 11 treibt dabei über eine Welle 57 eine Spindel 59 an. Die Spindel 59 steht in Eingriff mit einer Zahnung 56 einer in diesem Fall als Schneckenrad 61 ausgebildeten Stellscheibe 55. Der Elektromotor 11 kann somit die Stellscheibe 55 in oder gegen eine Betätigungs-Umlaufrichtung 39 bewegen.

An der Stellscheibe 55 sind an den beiden Stirnflächen jeweils erste Kulissenstrukturen 31 ausgebildet. Jede dieser Kulissenstrukturen 31 formt eine Anpressfläche 33, deren Radius r in Bezug auf eine Achse 65 der Stellscheibe 55 in der Betätigungs-Umlaufrichtung 39 kontinuierlich zunimmt.

Wird die Stellscheibe 55 entsprechend von dem Motor 11 gedreht, rollen die mit der Betätigungsstange 41 in Verbindung stehenden Lager 47 über Rollen 67 an der Anpressfläche 33 entlang. Aufgrund des zunehmenden Radius r der Anpressfläche 33 wird dabei ein Druck auf die Betätigungsstange 41 ausgeübt und die Betätigungsstange 41 sukzessive in Richtung 49 des Kolbens 17 verschoben. Ein dadurch durch den Kolben 17 bewirkter Hydraulikdruck kann dementsprechend eine Kupplung 27 ausrücken, d.h. auskuppeln, lassen.

Um die Kupplung 27 anschließend wieder einzukuppeln, wird der Aktuator 13 in umgekehrter Richtung betrieben. Während der Motor 11 die Stellscheibe 55 dreht, werden dann die Rollen 67 der Lager 47 zunächst permanent gegen die Anpressfläche 33 der ersten Kulissenstruktur 31 gepresst, da von der Rückstellfeder 29 der Kupplung 27 eine Rückstellkraft auf die mit den Lagern 47 gekoppelte Betätigungsstange 41 ausgeübt wird.

In der Nähe eines Punktes 35 minimalen Radius r der ersten Kulissenstruktur 31 kann diese Rückstellkraft jedoch nicht mehr ausreichen, um die Lager 47 zuverlässig an die Anpressfläche 33 anzupressen. Deswegen sind in diesem Bereich eine oder mehrere zweite Kulissenstrukturen 63 an der Stellscheibe 55 vorgesehen. Die zweiten Kulissenstrukturen 63 ragen, ähnlich wie die ersten Kulissenstrukturen 31, jeweils von einer der Stirnseiten der Stellscheibe 55 ab. Im dargestellten Beispiel sind sowohl die ersten als auch die zweiten Kulissenstrukturen 31, 63 einstückig mit der Stellscheibe 55 ausgebildet. Jede zweite Kulissenstruktur 63 bildet eine hin zu der Achse 65 gerichtete Anlagefläche 64 aus. Die zweite Kulissenstruktur 63 und die erste Kulissenstruktur 31 sind dabei, bezüglich ihrer Anlagefläche 64 bzw. ihrer Anpressfläche 33, parallel zueinander ausgebildet. Die erste und zweite Kulissenstruktur 31,63 sind derart in radialer Richtung voneinander beabstandet, dass ein mit der Betätigungsstange 41 mechanisch verbundenes Lager 47 bei einem Drehen der Stellscheibe 55 entgegen der Betätigungs-Umlaufrichtung 39 zwischen die erste und zweite Kulissenstruktur 31,63 eingreift. Die erste und zweite Kulissenstruktur sind jeweils bogenförmig ausgeführt.

Sobald die Stellscheibe 55 während eines Einkuppelvorgangs wieder soweit zurückgefahren wurde, dass ein über die Betätigungsstange 41 auf die Lager 47 ausgeübter Rückstelldruck nachzulassen droht, kommen die an einer Seite an der Anpressfläche 33 anliegenden Rollen 67 an ihrer gegenüberliegenden Seite in Anlage mit der Anlagefläche 64 der zweiten Kulissenstruktur 63. Aufgrund des beim Drehen entgegen der Betätigungs-Umlaufrichtung abnehmenden Radius r' der zweiten Kulissenstruktur 63 übt diese somit über die daran anliegenden Lager 47 einen Zug auf die Betätigungsstange 41 aus. Aufgrund dieses Zuges kann ein Kolben 47 über die Betätigungsstange 41 zurück über die Position einer Schnüffelbohrung hinausgezogen werden, ohne dass hierfür eine zusätzliche Feder vorgesehen sein müsste und ohne dass somit permanent gegen eine von einer solchen Feder erzeugte Kraft gearbeitet werden müsste.

Bei der in den Fig. 3 und 4 dargestellten Ausführungsform verläuft die Betätigungsstange 41 im Wesentlichen parallel zu der Welle 57 des Elektromotors 11.

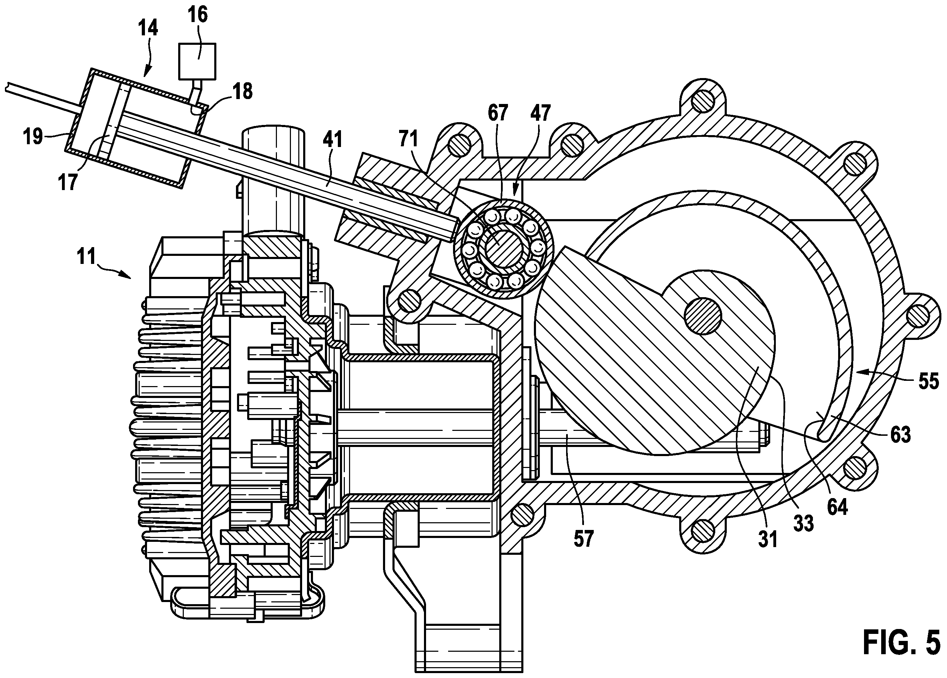

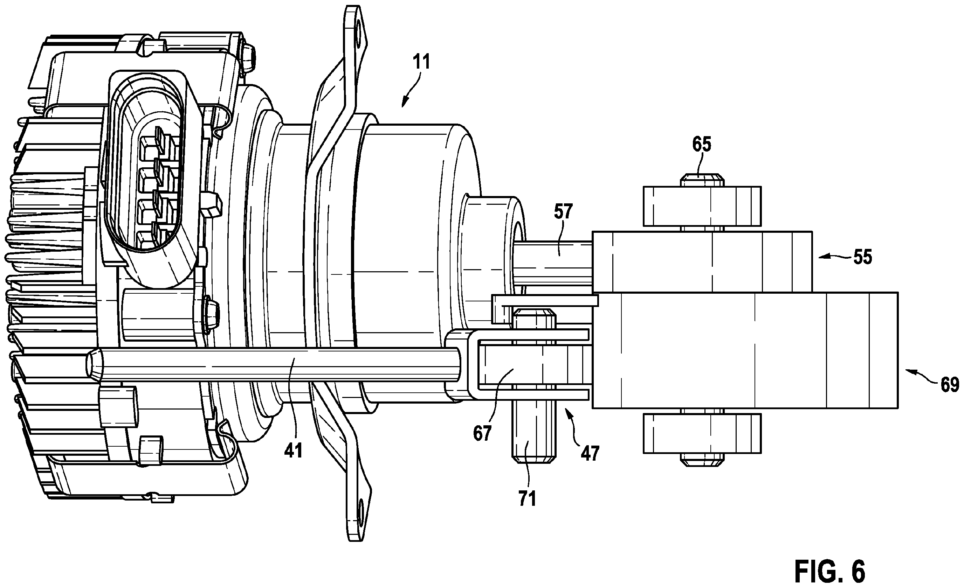

In einer alternativen Ausgestaltung, wie sie in den verschiedenen perspektivischen Ansichten der Fig. 5 und 6 dargestellt ist, ist die Betätigungsstange 41 hingegen in einem schrägen Winkel in Bezug auf die Welle 57 des Elektromotors 11 angeordnet, und zwar schräg in Richtung zurück zu dem Elektromotor 11. Der Kupplungssteller 14 kann somit neben dem Elektromotor 11 angeordnet werden, wodurch sich der gesamte Bauraum für das Kupplungssystem 1 verringern lässt.

Abgesehen von der Anordnung der Betätigungsstange 41 sind die Strukturen und Wirkweisen der Komponenten des in den Fig. 5 und 6 dargestellten Aktuators 13 weitgehend ähnlich wie bei dem in den Fig. 3 und 4 dargestellten System. Die von dem Motor 13 angetriebene Stellscheibe 55 ist zwar nicht einstückig mit einer ersten und einer zweiten Kulissenstruktur 31, 63 ausgebildet, sie ist jedoch mit einem separaten Bauelement 69, welches diese Kulissenstrukturen 31, 63 bildet, fest gekoppelt. Die Stellscheibe 55 und das die Kulissenstrukturen bildende Bauelement 69 sind um eine gemeinsame Achse 65 drehbar. Die Betätigungsstange 41 ist über ein Lager 47, bei dem eine Rolle 67 um eine Achse 71 drehbar ist, an der durch die erste Kulissenstruktur 31 gebildeten Anpressfläche 33 abgestützt. Die Anlagefläche 64 der zweiten Kulissenstruktur 63 hintergreift dabei die Achse 71 dieses Lagers 47, sobald die Stellscheibe 55 weit genug zurückgedreht wurde und zieht dabei die Betätigungsscheibe 41 in einer Richtung weg von dem Kupplungssteller 14, um einen darin befindlichen Kolben 17 über eine Schnüffelbohrung 18 hinaus zurückzuziehen.

In einer alternativen Ausführung kann die erste und zweite Kulissenstruktur als axial durchgängiger Schlitz in einer Stellscheibe ausgebildet sein. Dabei greift ein Führungselement - insbesondere ein Führungsstift - der Betätigungsstange axial in den Schlitz ein, der vorzugsweise spiralförmig ausgebildet ist.

## Patentansprüche

1. Aktuator (13) zum Betätigen eines hydraulischen Kupplungsstellers (14), aufweisend:
einen Elektromotor (11),
eine von dem Elektromotor (11) um eine Achse (65) drehend angetriebene Stellscheibe (55),
eine mit der Stellscheibe (55) gekoppelte erste Kulissenstruktur (31), und
eine Betätigungsstange (41),
wobei die Betätigungsstange (41) an ihrem einen Ende (43) mit dem Kupplungssteller (14) in Eingriff steht, wobei die Betätigungsstange (41) derart geführt und an der ersten Kulissenstruktur (31) abgestützt ist, dass bei einem Drehen der Stellscheibe (55) in der Betätigungs-Umlaufrichtung (39) von der ersten Kulissenstruktur (31) ein Druck auf die Betätigungsstange (41) ausgeübt wird,
**dadurch gekennzeichnet, dass**
die erste Kulissenstruktur (31) eine Anpressfläche (33) bildet, deren Radius (r) bezogen auf die Achse (65) - insbesondere kontinuierlich - von einem Punkt (35) minimalen Radius in einer Betätigungs-Umlaufrichtung (39) um die Achse (65) hin zu einem Punkt (37) maximalen Radius zunimmt, und
dass an die Stellscheibe (55) gekoppelt eine zweite Kulissenstruktur (63) ausgebildet ist, welche derart ausgeführt ist, dass bei einem Drehen der Stellscheibe (55) entgegen der Betätigungs-Umlaufrichtung (39) zumindest bereichsweise von der zweiten Kulissenstruktur (63) ein Zug auf die Betätigungsstange (41) ausgeübt wird.

2. Aktuator nach Anspruch 1, wobei die zweite Kulissenstruktur (63) derart ausgeführt ist, dass von der zweiten Kulissenstruktur (63) lediglich bei einem Drehen der Stellscheibe (55) entgegen der Betätigungs-Umlaufrichtung (39) in einem Winkelbereich nahe dem Punkt (35) minimalen Radius ein Zug auf die Betätigungsstange (41) ausgeübt wird.

3. Aktuator nach Anspruch 1 oder 2, wobei die zweite Kulissenstruktur (63) parallel zu der ersten Kulissenstruktur (31) verläuft.

4. Aktuator nach einem der Ansprüche 1 bis 3, wobei die erste und zweite Kulissenstruktur (31, 63) derart in radialer Richtung voneinander beabstandet sind, dass ein mit der Betätigungsstange (41) mechanisch verbundenes Lager (47) bei einem Drehen der Stellscheibe (55) entgegen der Betätigungs-Umlaufrichtung (39) zwischen die erste und zweite Kulissenstruktur (31, 63) eingreifen kann.

5. Aktuator nach einem der Ansprüche 1 bis 4, die Betätigungsstange (41) über ein an dieser angebrachtes Lager (47) an der ersten Kulissenstruktur (31) abgestützt ist, wobei das Lager (47) um eine Führungsachse (71) drehbar ist, und wobei die zweite Kulissenstruktur (63) derart ausgeführt ist, das bei einem Drehen der Stellscheibe (55) entgegen der Betätigungs-Umlaufrichtung (39) von der zweiten Kulissenstruktur (63) eine Zugkraft auf die Führungsachse (71) ausgeübt wird.

6. Aktuator nach einem der Ansprüche 1 bis 5, wobei an einer Welle (57) des Elektromotors (11) eine Spindel (59) angeordnet ist und wobei die Stellscheibe (55) als Schneckenrad (61) ausgebildet ist, dessen Zahnung (56) mit der Spindel (59) in Eingriff steht.

7. Aktuator nach einem der Ansprüche 1 bis 6, wobei die Stellscheibe (55) und die erste und zweite Kulissenstruktur (31, 63) einstückig ausgebildet sind.

8. Aktuator nach einem der Ansprüche 1 bis 7, wobei eine Welle (57) des Elektromotors (11) und die Stellstange (41) in einem schrägen Winkel zueinander angeordnet sind

9. Aktuator nach einem der Ansprüche 1 bis 8, wobei die erste und zweite Kulisse (31, 63) jeweils bogenförmig sind.

10. Elektrisch betätigbares Kupplungssystem (1), aufweisend einen Aktuator (13) zum Betätigen eines hydraulischen Kupplungsstellers (14) gemäß einem der Ansprüche 1 bis 9.

## Claims

1. Actuator (13) for activating a hydraulic clutch actuator (14), comprising:
an electric motor (11),
an actuation disc (55) which is driven in rotation about an axle (65) by the electric motor (11),
a first slotted link structure (31) which is coupled to the actuation disc (55), and an actuation rod (41),
wherein the actuation rod (41) is in engagement at its one end (43) with the clutch actuator (14), wherein the actuation rod (41) is guided and supported on the first slotted link structure (31) in such a way that when the actuation disc (55) rotates in the actuation rotation direction (39) a pressure is applied to the actuation rod (41) by the first slotted link structure (31),
**characterized in that**
the first slotted link structure (31) forms a pressing face (33) whose radius (r) increases with respect to the axle (65), in particular continuously, from a point (35) with a minimum radius in an actuation rotation direction (39) about the axle (65) towards a point (37) with a maximum radius, and **in that** a second slotted link structure (63) is constructed coupled to the actuation disc (55) and is embodied in such a way that when the actuation disc (55) rotates counter to the actuation rotation direction (39) tension is applied to the actuation rod (41) by the second slotted link structure (63) at least in certain areas.

2. Actuator according to Claim 1, wherein the second slotted link structure (63) is embodied in such a way that tension is applied to the actuation rod (41) by the second slotted link structure (63) only when the actuation disc (55) rotates counter to the actuation rotation direction (39) in an angular range near to the point (35) with the minimum radius.

3. Actuator according to Claim 1 or 2, wherein the second slotted link structure (63) runs parallel to the first slotted link structure (31).

4. Actuator according to one of Claims 1 to 3, wherein the first and second slotted link structures (31, 63) are spaced apart from one another in the radial direction in such a way that a bearing (47) which is mechanically connected to the actuation rod (41) can engage between the first and second slotted link structures (31, 63) when the actuation disc (55) rotates counter to the actuation rotation direction (39).

5. Actuator according to one of Claims 1 to 4, the actuation rod (41) is supported on the first slotted link structure (31) by means of a bearing (47) which is mounted on said actuation rod (41), wherein the bearing (47) can rotate about a guide axle (71), and wherein the second slotted link structure (63) is embodied in such a way that when the actuation disc (55) rotates counter to the actuation rotation direction (39) a tension is applied to the guide axle (71) by the second slotted link structure (63).

6. Actuator according to one of Claims 1 to 5, wherein a spindle (59) is arranged on a shaft (57) of the electric motor (11), and wherein the actuation disc (55) is embodied as a worm gear (61), the toothing (56) of which,is in engagement with the spindle (59).

7. Actuator according to one of Claims 1 to 6, wherein the actuation disc (55) and the first and second slotted link structures (31, 63) are constructed in one piece.

8. Actuator according to one of Claims 1 to 7, wherein a shaft (57) of the electric motor (11) and the actuation rod (41) are arranged at an oblique angle with respect to one another.

9. Actuator according to one of Claims 1 to 8, wherein the first and second slotted links (31, 63) are each arcuate.

10. Electrically actuable clutch system (1), having an actuator (13) for activating a hydraulic clutch actuator (14) according to one of Claims 1 to 9.

## Revendications

1. Organe de commande (13) destiné à actionner un actionneur hydraulique (14) d'embrayage, l'organe de commande présentant :
un moteur électrique (11),
un disque de commande (55) entraîné en rotation autour d'un axe (65) par le moteur électrique (11),
une première structure de coulisseau (31) accouplée au disque de commande (55) et une tringle d'actionnement (41),
la tringle d'actionnement (41) engageant la commande d'embrayage (14) par une première extrémité (43),
la tringle d'actionnement (41) étant guidée et soutenue sur la première structure de coulisseau (31) de telle sorte qu'une poussée est exercée par la première structure de coulisseau (31) sur la tringle d'actionnement (41) lors d'une rotation du disque de commande (55) dans le sens de rotation d'actionnement (39),
**caractérisé en ce que**
la première structure de coulisseau (31) forme une surface de poussée (33) dont le rayon (r) augmente depuis un point (35) de rayon minimum dans le sens de rotation d'actionnement (39) autour de l'axe (65) jusqu'à un point (37) de rayon maximum par rapport à l'axe (65), en particulier de manière progressive et
**en ce qu'**une deuxième structure de coulisseau (63) accouplée au disque de commande (55) est configurée de telle sorte qu'une traction est exercée sur la tringle d'actionnement (41) par au moins certaines parties de la deuxième structure de coulisseau (63) lors d'une rotation du disque de commande (55) dans le sens opposé au sens de rotation d'actionnement (39).

2. Organe de commande selon la revendication 1, dans lequel la deuxième structure de coulisseau (63) est réalisée de telle sorte qu'une traction est exercée par la deuxième structure de coulisseau (63) sur la tringle d'actionnement (41) uniquement lorsque le disque de commande (55) tourne dans le sens opposé au sens de rotation d'actionnement (39) sur une plage angulaire proche du point (35) de rayon minimum.

3. Organe de commande selon les revendications 1 ou 2, dans lequel la deuxième structure de coulisseau (63) s'étend parallèlement à la première structure de coulisseau (31).

4. Organe de commande selon l'une des revendications 1 à 3, dans lequel la première et la deuxième structure de coulisseau (31, 63) sont disposées à distance mutuelle dans la direction radiale par le fait qu'un palier (47) relié mécaniquement à la tringle d'actionnement (41) peut s'engager entre la première et la deuxième structure de coulisseau (31, 63 ) lors d'une rotation du disque de commande (55) dans le sens opposé au sens de rotation d'actionnement (39).

5. Organe de commande selon l'une des revendications 1 à 4, dans lequel la tringle d'actionnement (41) est soutenue sur la première structure de coulisseau (31) par un palier (47) placé sur la tringle d'actionnement, le palier (47) pouvant tourner autour d'un axe de guidage (71), la deuxième structure de coulisseau (63) étant réalisée de telle sorte qu'une force de traction est appliquée par la deuxième structure de coulisseau (63) sur l'axe de guidage (71) lors d'une rotation du disque de commande (55) dans le sens opposé au sens de rotation d'actionnement (39).

6. Organe de commande selon l'une des revendications 1 à 5, dans lequel une broche filetée (59) est disposée sur un arbre (57) du moteur électrique (11) et le disque de commande (55) est configuré comme roue hélicoïdale (61) dont la denture (56) engage la broche filetée (59).

7. Organe de commande selon l'une des revendications 1 à 6, dans lequel le disque de commande (55), la première et la deuxième structure de coulisseau (31, 63) sont réalisés d'une seule pièce.

8. Organe de commande selon l'une des revendications 1 à 7, dans lequel un arbre (57) du moteur électrique (11) et la tringle de commande (41) sont disposés obliquement l'un par rapport à l'autre.

9. Organe de commande selon l'une des revendications 1 à 8, dans lequel le premier et le deuxième coulisseau (31, 63) sont en forme d'arc de cercle.

10. Système d'embrayage (1) actionné électriquement, présentant un organe de commande (13) qui actionne une commande hydraulique (14) d'embrayage selon l'une des revendications 1 à 9.
